# EUROPÄISCHE PATENTSCHRIFT

(11) **EP 3 358 091 B1**
(45) Veröffentlichungstag und Bekanntmachung des Hinweises auf die Patenterteilung: **29.07.2020**
(21) Anmeldenummer: 18153351.4
(22) Anmeldetag: 25.01.2018
(51) Int. Cl.: E03C 1/04, F16K 31/60, F16K 11/078

(54) **MISCHKARTUSCHE MIT AUF DIE LAGERHÜLSE AUFSTECKBARER ANSCHLAGHÜLSE**
MIXING CARTRIDGE WITH ABUTMENT SLEEVE WHICH CAN BE CONNECTED TO THE BEARING SLEEVE
CARTOUCHE DE MÉLANGE POURVUE DE DOUILLE DE BUTÉE ENFICHABLE SUR LA DOUILLE DE SUSPENSION

(30) Priorität: 01.02.2017 DE 102017101990
(43) Veröffentlichungstag der Anmeldung: 08.08.2018
(73) Patentinhaber: Ideal Standard International NV, 1935 Zaventem (BE)
(72) Erfinder: Müller, Alexander, 54518 Hupperath (DE); Thönnes, Theo, 54552 Darscheid (DE)
(74) Vertreter: Feucker, Max Martin

(56) Entgegenhaltungen:
- EP-A2- 0 311 546
- DE-B4-102009 042 501
- DE-U1- 20 106 658
- US-A1- 2009 108 223

## Beschreibung

Die vorliegende Erfindung betrifft eine Mischkartusche für eine Sanitärarmatur, mit einem ein Gehäuseoberteil aufweisenden Kartuschengehäuse, mit einer in dem Kartuschengehäuse verdrehbar angeordneten Lagerhülse, an welcher ein Stellhebel schwenkbar gelagert ist, und mit einer Anschlaghülse, an welcher wenigstens ein Anschlag ausgebildet ist, welcher zur Begrenzung einer Relativdrehbewegung der Lagerhülse zu dem Gehäuseoberteil mit wenigstens einem Gegenanschlag in Anlage kommt, wobei die Anschlaghülse direkt und drehfest auf die Lagerhülse aufsteckbar ist und der wenigstens eine Gegenanschlag drehfest mit dem Gehäuseoberteil verbunden ist.

Eine Mischkartusche mit den vorgenannten Merkmalen ist aus DE 10 2009 042 501 B4 bekannt, bei welcher die Anschlaghülse drehfest mit dem Kartuschengehäuse verbunden ist, so dass sich die Lagerhülse relativ zu der Anschlaghülse verdrehen lässt. Bei dieser Lösung soll die Anschlaghülse an dem Gehäuseoberteil außen befestigt sein und das Gehäuseoberteil von außen nach innen übergreifen, was einen relativ großen Durchmesser der Anschlaghülse erforderlich macht.

Eine Mischkartusche mit den eingangs genannten Merkmalen ist zudem jeweils aus DE 201 06 658 U1 und EP 0 311 546 A2 bekannt. Bei diesen Mischkartuschen ist die Anschlaghülse direkt und drehfest auf die Lagerhülse aufsteckbar und der wenigstens eine Gegenanschlag ist drehfest und unmittelbar mit dem Gehäuseoberteil verbunden. Allerdings ist so nicht verhindert, dass sich der Anschlag und der Gegenanschlag in radialer Richtung zueinander bewegen können.

Aufgabe der vorliegenden Erfindung ist es, eine alternative Lösung für die Befestigung der Anschlagshülse an der Mischkartusche zu geben, die eine radiale Relativbewegung zwischen Anschlag und Gegenanschlag verhindert. Gelöst wird die Aufgabe mit einer Mischkartusche mit den Merkmalen des unabhängigen Anspruchs. Vorteilhafte Weiterbildungen der Mischkartusche sind in den abhängigen Ansprüchen und in der Beschreibung angegeben, wobei einzelne Merkmale der vorteilhaften Weiterbildungen in technologisch sinnvoller Weise beliebig miteinander kombinierbar sind. Der Umfang der geschützten Erfindung ist in den Ansprüchen definiert.

Gelöst wird die Aufgabe durch eine Mischkartusche mit den eingangs genannten Merkmalen, bei der die Anschlaghülse direkt und drehfest auf die Lagerhülse aufsteckbar ist und bei der der wenigstens eine Gegenanschlag drehfest mit dem Gehäuseoberteil verbunden ist und bei der der wenigstens eine Gegenanschlag unmittelbar, insbesondere einteilig an dem Gehäuseoberteil ausgebildet ist und sowohl radial innen als auch radial außen von der aufgesteckten Anschlaghülse übergriffen wird.

Die Erfindung sieht in ihrem Grundgedanken also vor, dass die Anschlaghülse unmittelbar an der Lagerhülse drehfest befestigbar ist, so dass die Lagerhülse auf dasjenige Bauteil der Mischkartusche aufsteckbar ist, welches axial am weitesten nach oben hinausragt und reine Drehbewegungen um die Symmetrieachse ausführt. Da keine im Betrieb Kräfte übertragende Befestigung der Anschlaghülse an dem Gehäuse erforderlich ist, kann die Mischkartusche schlanker gebaut werden. Hierdurch ist zudem die Montage vereinfacht, da die Anschlaghülse auf das am einfachsten zugängliche Bauteil der Mischkartusche aufgesteckt werden kann. Die Anschlaghülse weist also insbesondere in Umfangsrichtung verlaufende, konzentrische Wandabschnitte auf, zwischen denen der Gegenanschlag angeordnet ist. Somit wird verhindert, dass sich der Anschlag und der Gegenanschlag in radialer Richtung zueinander bewegen können. Der oder die Gegenanschläge sind also zumindest während der Drehbewegung aber insbesondere auch in der Anschlagstellung zwischen den an der Anschlaghülse ausgebildeten Wandungen angeordnet.

Mischkartuschen der eingangs genannten Art werden im Sanitärbereich eingesetzt, um Kalt- und Heißwasser zu mischen, wobei die Temperatur des Mischwassers und die Durchflussmenge mittels der Mischkartusche eingestellt werden können. Hierzu ist die Lagerhülse um eine axiale Symmetrieachse der Mischkartusche drehbar, wobei durch Drehen um diese Symmetrieachse bevorzugt die Temperatur des Mischwassers eingestellt werden kann. Der Stellhebel ist zudem um eine zu der axialen Symmetrieachse orthogonale Schwenkachse schwenkbar, wobei durch Verschwenken des Stellhebels um die Schwenkachse insbesondere die Durchflussmenge eingestellt werden kann. Die Mischkartusche weist insbesondere mindestens eine stationäre Scheibe und eine dazu bewegliche Steuerscheibe auf, wobei mittels des Stellhebels die Relativlage der Steuerscheibe zu der stationären Scheibe veränderbar ist. Solche Mischkartuschen sind hinlänglich aus dem Stand der Technik bekannt.

Die Anschlaghülse kann insbesondere in unterschiedlichen Stellungen drehfest auf die Lagerhülse aufgesteckt werden. Der Anschlag an der Anschlaghülse und der Gegenanschlag sind so angeordnet und ausgebildet, dass bei aufgesteckter Anschlaghülse eine Drehbewegung der Lagerhülse mittels Anlage des Anschlags an dem Gegenanschlag begrenzt wird. Durch die Begrenzung der Relativbewegung wird insbesondere der maximale Heißwasserzufluss und somit eine maximale Mischwassertemperatur vorgegeben. Insofern kann durch die unterschiedlichen Relativstellungen zwischen der Lagerhülse und der auf die Lagerhülse aufgesteckten Anschlaghülse die maximale Mischwassertemperatur vorgegeben werden.

Insbesondere sind an der Lagerhülse und der Anschlaghülse Nuten und Rippen vorgesehen, die über den Umfang verteilt, also in Umfangsrichtung hintereinander angeordnet sind und die sich in Einsteckrichtung erstrecken, wobei die Anschlaghülse in unterschiedlichen Relativstellungen auf die Lagerhülse aufsteckbar ist. Die Anschlaghülse kann also in unterschiedlichen Ausrichtungen auf die Lagerhülse aufgesteckt werden.

Bevorzugt sind an axialen Enden der Nuten und Rippen Erweiterungen und Verengungen ausgebildet, die das anfängliche Aufstecken erleichtern. Durch die Erweiterungen und Verengungen wird also eine grobe Vorausrichtung für das Aufstecken vorgegeben, wobei beim weiteren Einstecken sich die Anschlaghülse selbsttätig in die Aufsteckstellung bewegt.

Alternativ oder zusätzlich kann vorgesehen sein, dass die Rippen und Nuten schwalbenschwanzförmig ausgebildet sind, so dass eine noch sicherere Befestigung auf der Lagerhülse gegeben ist.

Damit sich die Anschlaghülse nicht unbeabsichtigt von der Lagerhülse lösen kann, ist insbesondere vorgesehen, dass mindestens ein Rastmittel ausgebildet ist, über welches die Anschlaghülse an der Lagerhülse in der aufgesteckten Stellung verrastet ist. Hierzu können insbesondere Vorsprünge und Rücksprünge ausgebildet sein, die in der aufgesteckten Stellung in Eingriff miteinander sind. Insbesondere können auch Hakenelemente an der Anschlaghülse und/oder der Lagerhülse ausgebildet sein.

Bevorzugt ist, dass das mindestens eine Rastmittel im Bereich der Nuten und Rippen ausgebildet ist. Besonders bevorzugt ist mindestens ein Rastmittel durch einen radialen Vorsprung in einer Nut von Lagerhülse oder Anschlaghülse ausgebildet, während mindestens ein komplementärer Vorsprung an einer Rippe von Anschlaghülse oder Lagerhülse ausgebildet ist. Insbesondere ist an der Lagerhülse oder der Anschlaghülse nur genau ein Rastmittel ausgebildet, während an dem anderen Element mehrere komplementäre Rastmittel zur Festlegung in unterschiedlichen Relativausrichtungen ausgebildet sind.

Um die Montage der Anschlaghülse noch weiter zu vereinfachen, können zwei Anschläge und zwei Gegenanschläge jeweils um 180 Grad versetzt zueinander an der Anschlaghülse beziehungsweise dem Gehäuseoberteil ausgebildet sein, so dass die Anschlaghülse zur Einstellung der gleichen Anschlagsfunktion, entsprechend also insbesondere einer maximalen Mischwassertemperatur, in zwei Stellungen auf die Lagerhülse aufsteckbar ist. Die zwei Anschläge bzw. die zwei Gegenanschläge sind also geometrisch jeweils identisch ausgebildet und um 180 Grad in Umfangsrichtung versetzt angeordnet.

Damit insbesondere auch in der Anschlagstellung ein axiales Abheben der Anschlaghülse von der Lagerhülse verhindert wird, kann der wenigstens eine Anschlag und der wenigstens eine Gegenanschlag so ausgebildet sein, dass der wenigstens eine Anschlag den wenigstens einen Gegenanschlag in der Anschlagstellung untergreift. Der Anschlag weist also insbesondere eine in Umfangsrichtung verlaufenden Überstand auf, unter welchen zumindest ein Teil des Gegenanschlags in der Anschlagstellung eingeführt ist.

Bevorzugt sind auf der Oberseite der Anschlaghülse Markierungen zur Anzeige unterschiedlicher Relativstellungen ausgebildet. Die Markierungen sind insbesondere in Form von Zahlen gebildet. Durch diese Markierungen wird verdeutlicht, mit welchen Relativstellungen der Anschlaghülse auf der Lagerhülse höhere oder niedrigere Temperaturen verbunden sind.

Um die Handhabung der Anschlaghülse weiter zu vereinfachen, weist die Anschlaghülse zwei von der übrigen Kontur axial vorstehende Handhabungsvorsprünge auf. Diese Handhabungsvorsprünge sind insbesondere auf gegenüberliegenden Seiten der Anschlaghülse gebildet und können somit von einem Benutzer einfach gegriffen werden.

Die Erfindung sowie das technische Umfeld werden im Folgenden anhand der Figuren beispielhaft erläutert. Es zeigen schematisch
- Fig. 1: eine Mischkartusche,
- Fig. 2: die Mischkartusche im Querschnitt,
- Fig. 3: das Kartuschengehäuse der Mischkartusche,
- Fig. 4: eine perspektivische Ansicht von oben auf die Anschlaghülse,
- Fig. 5: eine perspektivische Ansicht von unten auf die Anschlaghülse und
- Fig. 6: eine Lagerhülse der Mischkartusche.

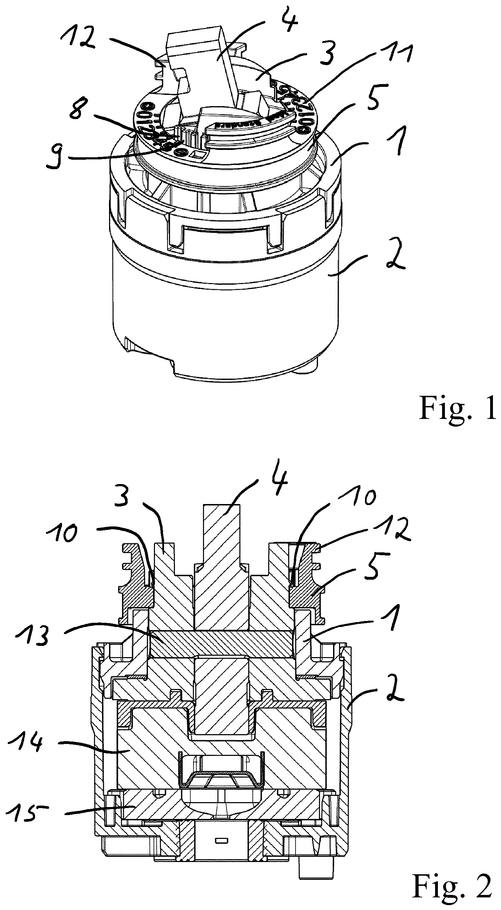

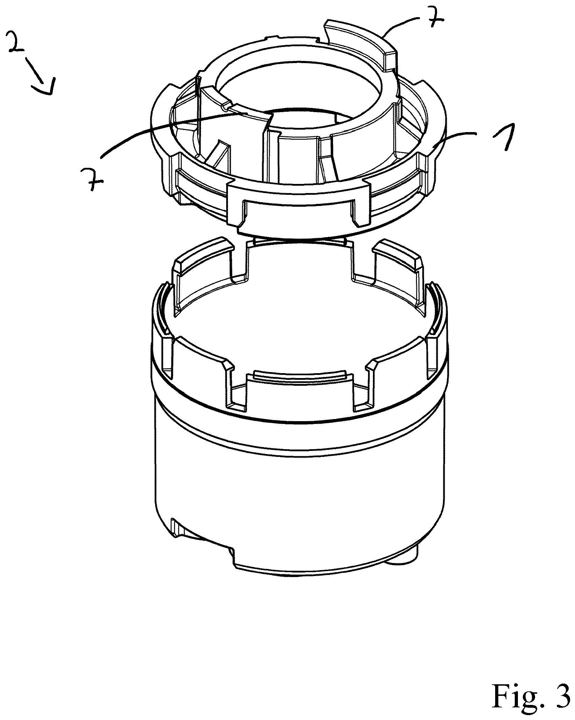

In den Fig. 1 und 2 ist eine Mischkartusche dargestellt, wobei in den Fig. 3 bis 6 einzelne Bauteile dieser Mischkartusche dargestellt sind.

Die Mischkartusche umfasst ein Kartuschengehäuse 2 mit einem daran befestigten Gehäuseoberteil 1. Am Boden des Kartuschengehäuses 2 ist eine stationäre Scheibe 15 angeordnet, durch welche Kalt- und Heißwasser sowie das Mischwasser hindurchtritt. Oberhalb der stationären Scheibe 15 ist eine Steuerscheibe 14 angeordnet, deren Relativlage zu der stationären Scheibe 15 mittels eines Stellhebels 4 geändert werden kann. Durch die Relativlage der Steuerscheibe 14 zu der stationären Scheibe 15 können sowohl die Mischwassertemperatur als auch die Durchflussmenge in bekannter Weise eingestellt werden.

Der Stellhebel 4 ist hierzu zum einen um eine Schwenkachse 13 an einer Lagerhülse 3 schwenkbar, wobei durch Verschwenken um die Schwenkachse 13 die Durchflussmenge eingestellt werden kann. Der Stellhebel 4 ist zum anderen gemeinsam mit der Lagerhülse 3 drehbar in dem Kartuschengehäuse 2 gelagert, wobei durch Drehung der Lagerhülse 3 um eine axiale Symmetrieachse des Kartuschengehäuses 2 die Mischwassertemperatur geändert werden kann. Zur Bedienung der Mischkartusche wird in einem montierten Zustand ein Bedienhebel an den Stellhebel 4 angebracht, mit welchem sowohl der Stellhebel 4 verschwenkt als auch die Lagerhülse 3 mittels des Stellhebels 4 verdreht werden kann.

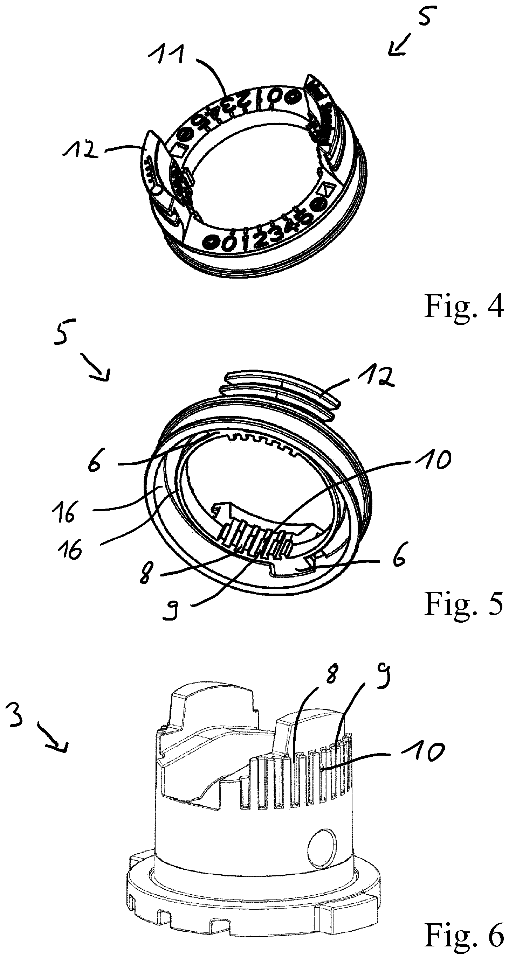

Um eine Drehbewegung der Lagerhülse 3 und damit eine Mischwassertemperatur zu begrenzen, ist eine Anschlaghülse 5 auf die Lagerhülse 3 aufgesteckt. Um Relativstellungen zwischen der Anschlaghülse 5 und der Lagerhülse 3 vorzugeben, sind an diesen in Axialrichtung verlaufende Nuten 8 und Rippen 9 ausgebildet, wie dies aus den Fig. 5 und 6 hervorgeht. Die Anschlaghülse 5 kann also in unterschiedlichen Ausrichtungen auf die Lagerhülse 3 aufgesteckt werden. Damit die Anschlaghülse 5 sicher auf der Lagerhülse 3 befestigt ist, sind Rastmittel 10 im Bereich der Nuten 8 und Rippen 9 ausgebildet. Insbesondere ist ein Vorsprung als Rastmittel 10 in einer Nut 8 an der Lagerhülse 3 angeformt, während komplementäre Rastmittel 10 an den Rippen 9 der Anschlaghülse 5 in Form von Vorsprüngen ausgebildet sind.

Aus Fig. 5 ist auch zu erkennen, dass auf einer Unterseite der Anschlaghülse 5 zwei um 180 Grad versetzt zueinander ausgebildete Anschläge 6 ausgebildet sind. Diese Anschläge 6 begrenzen eine Relativbewegung der Lagerhülse 3 gegenüber dem insbesondere in Fig. 3 dargestellten Gehäuseoberteil 1, indem die Anschläge 6 mit den am Gehäuseoberteil 1 ausgebildeten Gegenanschlägen 7 in Anlage kommen. Die Gegenanschläge 7 sind an einer Seite so geformt, dass sie in Umfangsrichtung überstehen, so dass die Anschläge 6 in der Anlagestellung unter diesen Überstand greifen. Hierdurch wird eine Axialbewegung der Anschlaghülse 5 und damit auch der mit dieser verrasteten Lagerhülse 3 verhindert.

Zudem ist aus einer Zusammenschau der Fig. 5 und 3 zu erkennen, dass die Anschlaghülse 5 in Umfangsrichtung verlaufende, konzentrische Wandungen 16 aufweist, zwischen denen die Gegenanschläge 7 des Gehäuseoberteils 1 angeordnet sind. Aufgrund dieser wird eine radiale Relativbewegung zwischen den Anschlägen 6 und den Gegenanschlägen 7 verhindert.

Aus Fig. 4 geht noch hervor, dass auf einer Oberseite der Anschlaghülse 5 Markierungen 11 angebracht sind, die mögliche Relativstellungen zwischen der Anschlaghülse 5 der Lagerhülse 3 anzeigen, wobei die als Zahlen ausgebildeten Markierungen 11 eine relative Höhe der Mischwassertemperatur wiedergeben.

An der Anschlaghülse 5 sind zudem zwei von der übrigen Kontur in axialer Richtung vorstehende Handhabungsvorsprünge 12 ausgebildet, die zur einfacheren Handhabung der Anschlaghülse 5 dienen.

### Bezugszeichenliste

- 1: Gehäuseoberteil
- 2: Kartuschengehäuse
- 3: Lagerhülse
- 4: Stellhebel
- 5: Anschlaghülse
- 6: Anschlag
- 7: Gegenanschlag
- 8: Nut
- 9: Rippe
- 10: Rastmittel
- 11: Markierung
- 12: Handhabungsvorsprung
- 13: Schwenkachse
- 14: Steuerscheibe
- 15: stationäre Scheibe
- 16: Wandung

## Patentansprüche

1. Mischkartusche für eine Sanitärarmatur, mit einem ein Gehäuseoberteil (1) aufweisenden Kartuschengehäuse (2), mit einer in dem Kartuschengehäuse (2) verdrehbar angeordneten Lagerhülse (3), an welcher ein Stellhebel (4) schwenkbar gelagert ist, und mit einer Anschlaghülse (5), an welcher wenigstens ein Anschlag (6) ausgebildet ist, welcher zur Begrenzung einer Relativdrehbewegung der Lagerhülse (3) zu dem Gehäuseoberteil (1) mit wenigstens einem Gegenanschlag (7) in Anlage kommt, wobei die Anschlaghülse (5) direkt und drehfest auf die Lagerhülse (3) aufsteckbar ist und der wenigstens eine Gegenanschlag (7) drehfest mit dem Gehäuseoberteil (1) verbunden ist und unmittelbar an dem Gehäuseoberteil (1) ausgebildet ist, **dadurch gekennzeichnet, dass** der wenigstens eine Gegenanschlag (7) sowohl radial innen als auch radial außen von der aufgesteckten Anschlaghülse (5) übergriffen wird.

2. Mischkartusche nach Anspruch 1, wobei an der Lagerhülse (3) und der Anschlaghülse (5) Nuten (8) und Rippen (9) vorgesehen sind, die in Umfangsrichtung hintereinander angeordnet sind und die sich in Einsteckrichtung erstrecken.

3. Mischkartusche nach Anspruch 2, wobei an axialen Enden der Nuten (8) und Rippen (9) Erweiterungen und Verengungen ausgebildet sind, die das anfängliche Aufstecken erleichtern.

4. Mischkartusche nach einem der vorhergehenden Ansprüche, wobei mindestens ein Rastmittel (10) vorgesehen ist, über welches die Anschlaghülse (5) an der Lagerhülse (3) in der aufgesteckten Stellung verrastet ist.

5. Mischkartusche nach Anspruch 2 und 4, wobei das mindestens eine Rastmittel (10) im Bereich der Nuten (8) und Rippen (9) ausgebildet ist.

6. Mischkartusche nach einem der vorhergehenden Ansprüche, wobei zwei Anschläge (6) und zwei Gegenanschläge (7) jeweils um 180° versetzt zueinander ausgebildet sind, so dass die Anschlaghülse (5) zur Einstellung der gleichen Anschlagsfunktion in zwei Stellungen auf die Lagerhülse (3) aufsteckbar ist.

7. Mischkartusche nach einem der vorhergehenden Ansprüche, wobei der wenigstens eine Anschlag (6) und der wenigstens eine Gegenanschlag (7) so ausgebildet sind, dass der wenigstens eine Anschlag (6) den wenigstens einen Gegenanschlag (7) in der Anschlagstellung untergreift.

8. Mischkartusche nach einem der vorhergehenden Ansprüche, wobei auf der Oberseite der Anschlaghülse (5) Markierungen (11) zur Anzeige unterschiedlicher Stellungen ausgebildet sind.

9. Mischkartusche nach einem der vorhergehenden Ansprüche, wobei die Anschlaghülse (5) zwei von der übrigen Kontur axial vorstehende Handhabungsvorsprünge (12) aufweist.

## Claims

1. Mixer cartridge for a sanitary fitting, with a cartridge housing (2) having an upper housing part (1), with a bearing sleeve (3) which is rotatable within the cartridge housing (2) and on which an adjusting lever (4) is mounted in a swivelable manner, and with a stop sleeve (5), on which at least one stop (6) is formed, which at least one stop (6) in order to limit a relative rotating movement of the bearing sleeve (3) in relation to the upper housing part (1) comes into contact with at least one counter-stop (7), wherein the stop sleeve (5) can be mounted directly and non-rotationally on the bearing sleeve (3) and the at least one counter-stop (7) is non-rotationally connected to the upper housing part (1) and formed directly on the upper housing part (1), **characterised in that** the at least one counter-stop (7) is both radially inwards and radially outwards overlapped by the mounted stop sleeve (5).

2. Mixer cartridge according to claim 1, wherein on the bearing sleeve (3) and the stop sleeve (5), grooves (8) and ribs (9) are provided which are arranged behind each other in the circumferential direction and extend in the direction of insertion.

3. Mixer cartridge according to claim 2, wherein at axial ends of the grooves (8) and ribs (9) there are expansions and constrictions which facilitate the initially mounting.

4. Mixer cartridge according to any one of the preceding claims, wherein at least one securing means (10) is provided by means of which the stop sleeve (5) is secured on the bearing sleeve (3) in the mounted position.

5. Mixer cartridge according to claim 2 and 4, wherein the at least one securing means (10) is provided in the area of the grooves (8) and ribs (9).

6. Mixer cartridge according to any one of the preceding claims, wherein two stops (6) and two counter-stops (7) are provided which are each offset by 180° with regard to each other so that the stop sleeve (5) can be mounted on the bearing sleeve (3) in two positions to set the same stop function.

7. Mixer cartridge according to any one of the preceding claims, wherein the at least one stop (6) and the at least one counter-stop (7) are configured in such a way that in the stop position the at least one stop (6) engages under the at least one counter-stop (7).

8. Mixer cartridge according to any one of the preceding claims, wherein on the upper side of the stop sleeve (5), markings (11) are provided to indicate different settings.

9. Mixer cartridge according to any one of the preceding claims, wherein the stop sleeve (5) comprises two operating protrusions (12) axially projecting from the remaining contour.

## Revendications

1. Cartouche de mélange pour un robinet de sanitaires, comprenant un compartiment de cartouche (2) présentant une partie supérieure de compartiment (1), avec un manchon de stockage (3) disposé rotatif dans le compartiment de cartouche (2) sur laquelle un levier de réglage (4) est disposé pivotant, et comprenant un manchon de butée (5) sur lequel au moins une butée (6) est formée, qui vient en appui avec au moins une contre-butée (7) pour limiter un mouvement rotatif relatif du manchon de stockage (3) par rapport à la partie supérieure de compartiment (1), dans lequel le manchon de butée (5) peut être enfiché directement et fixe en rotation sur le manchon de stockage (3) et l'au moins une contre-butée (7) est reliée fixe en rotation avec la partie supérieure de compartiment (1) et est formée directement sur la partie supérieure de compartiment (1), **caractérisée en ce que** l'au moins une contre-butée (7) est recouverte tant radialement à l'intérieur que radialement à l'extérieur, par le manchon de butée (5) inséré.

2. Cartouche de mélange selon la revendication 1, dans laquelle des rainures (8) et des nervures (9) sont prévues sur le manchon de stockage (3) et sur le manchon de butée (5), qui sont disposées l'une derrière l'autre dans le sens périphérique et s'étendent dans le sens d'insertion.

3. Cartouche de mélange selon la revendication 2, dans laquelle des élargissements et des rétrécissements sont formés aux extrémités axiales des rainures (8) et des nervures (9), qui facilitent l'insertion au départ.

4. Cartouche de mélange selon l'une des revendications précédentes, dans laquelle au moins un moyen d'encliquetage (10) est prévu par lequel le manchon de butée (5) est encliqueté sur le manchon de stockage (3) dans la position insérée.

5. Cartouche de mélange selon la revendication 2 et 4, dans laquelle l'au moins un moyen d'encliquetage (10) est formé au niveau des rainures (8) et des nervures (9).

6. Cartouche de mélange selon l'une des revendications précédentes, dans laquelle deux butées (6) et deux contre-butées (7) sont formées décalées de 180° entre elles, de sorte que le manchon de butée (5) peut être inséré dans deux positions sur le manchon de stockage (3) pour régler la même fonction de butée.

7. Cartouche de mélange selon l'une des revendications précédentes, dans laquelle l'au moins une butée (6) et l'au moins une contre-butée (7) sont ainsi formées que l'au moins une butée (6) met en prise l'au moins une contre-butée (7) dans la position de butée.

8. Cartouche de mélange selon l'une des revendications précédentes, dans laquelle des marquages (11) pour afficher différentes positions sont formés sur la face supérieure du manchon de butée (5).

9. Cartouche de mélange selon l'une des revendications précédentes, dans laquelle le manchon de butée (5) présente deux saillies de manipulation (12) en saillie axiale du reste du contour.
